# EUROPEAN PATENT APPLICATION

(11) **EP 1 333 561 A2**
(43) Date of publication of application: **06.08.2003**
(21) Application number: 03250343.5
(22) Date of filing: 20.01.2003
(51) Int. Cl.: H02K 9/08

(54) **Rotor cooling apparatus**

(30) Priority: 30.01.2002 US 58414
(71) Applicant: UQM Technologies, Inc., Frederick, Colorado 80530 (US)
(72) Inventor: Denton, Darin, Idaho Springs, Colorado 80452 (US); Lutz, Jon, Westminster, Colorado 80021 (US); Lewis, Kevin R., Littleton, Colorado 80120-2719 (US); Frazzani, Jeff, Westminster, Colorado 80031 (US); Ley, Josh, Lakewood, Colorado 80228 (US)
(74) Representative: Bardo, Julian Eason

(57) **Abstract**

A brushless permanent magnet electric motor or generator having a hollow rotor, is provided with apertures in ends of the rotor. The apertures allow air to flow through the center of the hollow rotor and remove heat from the rotor. Vanes or blades can be fixed to the shaft within the rotor or fixed to ends of the rotor to force air through an interior of the hollow rotor. Ends of the rotor can be shaped to form fan blades that draw air through the interior of the rotor. Air flowing through the rotor can be recirculated by flowing back through passageways formed between the stator and the motor/generator casing, through passages through the stator, and/or back through an air gap between the stator and the rotor.

## Description

### BACKGROUND OF THE INVENTION

### 1. Field of the Invention

The invention relates generally to the field of electric motors and generators, and specifically to brushless permanent magnet motors and generators, which are hereafter referred to as "electric machines" or "machines".

### 2. Background Information

A brushless permanent magnet electric machine generally includes a rotor and a stator. The rotor assembly can include equally spaced magnet poles of alternating polarity located around an outer perimeter of the rotor. A magnet ring around the outer perimeter can also be used, and can be made of, for example, a solid neodymium-iron-boron permanent magnet ring. In one known configuration, the rotor rotates within the stator. For example, where the stator partially surrounds the rotor, the rotor rotates within the stator. Other configurations are known, for example external rotor configurations where the rotor partially surrounds the stator. The stator includes windings, which when energized with an electric current, cause the rotor to rotate by the interaction of the winding current with the rotor's magnetic field.

In some applications, brushless permanent magnet machines can be subjected to high temperatures. The permanent magnet materials that are often used, can retain the magnetic properties up to a threshold temperature. When this threshold temperature is reached or exceeded, the magnetic properties begin to deteriorate, resulting in reduced machine performance. For example, neodymium-iron-boron magnets can be permanently demagnetized at temperatures above 300 to 400 degrees Fahrenheit, depending upon the grade of the magnet. Other rare earth magnets, for example samarium-cobalt magnets, can be permanently demagnetized at temperatures above 650 degrees Fahrenheit. However, samarium-cobalt magnets are typically more expensive than neodymium-iron-boron magnets. Subjecting the magnets to temperatures that are close to, but less than, the threshold temperatures for a long period of time can damage the magnets and adversely affect machine performance.

Increased demand for hybrid vehicles that use electric machines for propulsion and regenerative power recovery has resulted in an increased demand for brushless permanent magnet machines capable of providing continuous electrical or locomotive power. There is also an increasing demand for higher power outputs, or higher continuous power output ratings for the electric machines. In these applications, operating the machines at higher continuous power levels can result in greater heat buildup in the rotor of the machine. One source of rotor heat comes from friction in bearings and/or bearing seals during operation of the machine. Current from switching harmonics that occur during operation of the machine, create eddy currents in the rotor. These eddy currents in turn generate heat in the rotor. In commercially available sealed brushless permanent magnet machines, heat generated by friction losses in the bearings and/or the bearing seals heats the rotor through the drive shaft to which the rotor is fixed. This heat, together with heat generated by eddy currents in the rotor, can be difficult to remove from the rotor because the rotor is typically isolated from the rest of the machine and only connected by the restrictive thermal pathway formed by the drive shaft.

To overcome this problem and remove heat from the rotor, various cooling methods are known in the art. These methods include a) forcing cooling air to flow around an exterior of the machine, b) forcing air into, through and then out of the machine, and c) cooling the machine by providing liquid coolant that flows through a jacket heat exchanger surrounding a casing of the machine. Because the rotor is effectively thermally isolated from the rest of the machine, however, these methods often fail to sufficiently cool the rotor.

Accordingly, a need exists to efficiently and inexpensively cool the rotor of a brushless permanent magnet electric machine, to increase reliability of the machine and/or increase a given machine's maximum continuous power rating.

### SUMMARY

In accordance with exemplary embodiments of the present invention, a brushless permanent magnet electric machine having a hollow rotor with apertures and ends of the rotor is provided. The apertures allow air to flow through the center of the hollow rotor to remove heat from the rotor and transfer the heat to cooler machine surfaces, for example the machine housing and machine end bells. Vanes or blades fixed to the shaft within the machine or fixed to the rotor can also be provided, to force air through an interior of the hollow rotor. In one embodiment, blades are attached to the shaft within the rotor. In another embodiment, the ends of the rotor are shaped to form fan blades that draw air through the interior of the rotor. Air that flows into one end of the rotor and exits the other end of the rotor in a flow along the rotational axis of the rotor, can be recirculated by flowing back through passageways formed a) between the stator and the machine casing, b) through the stator, c) through the machine casing, and/or d) back through an air gap between the stator and the rotor. In an exemplary embodiment of the invention, the machine casing is sealed so that the cooling air flowing through the rotor travels in a closed path or loop.

### BRIEF DESCRIPTION OF THE DRAWINGS

Other objects and advantages of the present invention will become apparent to those skilled in the art from the following detailed description of preferred embodiments, when read in conjunction with the accompanying drawings wherein like elements have been designated with like reference numerals and wherein:

Figure 1 shows an electric machine in accordance with an exemplary embodiment of the invention.

Figure 2 shows an end view of the electric machine rotor shown in Figure 1.

Figure 3 shows an electric machine in accordance with another exemplary embodiment of the invention.

Figure 4 shows another exemplary embodiment of the present invention.

Figure 5 shows an end view of the rotor hub shown in Figure 4.

Figure 6 shows a sectional view of the rotor hub shown in Figure 5 along lines 6-6.

Figure 7 shows a sectional view of the rotor hub shown in Figure 5, along lines 7-7.

Figure 8 shows a side cross-sectional view of an exemplary electric machine in accordance with an embodiment of the invention, with air flow passages in the machine casing or housing.

Figure 9 shows an end cross-sectional view of the electric machine of Figure 8, along lines 8-8.

Figure 10 shows a side cross-sectional view of an exemplary electric machine in accordance with another embodiment of the invention, with air flow passages in the stator.

Figure 11 shows an end cross-sectional view of the electric machine of Figure 10, along lines 11-11.

### DETAILED DESCRIPTION OF PREFERRED EMBODIMENTS

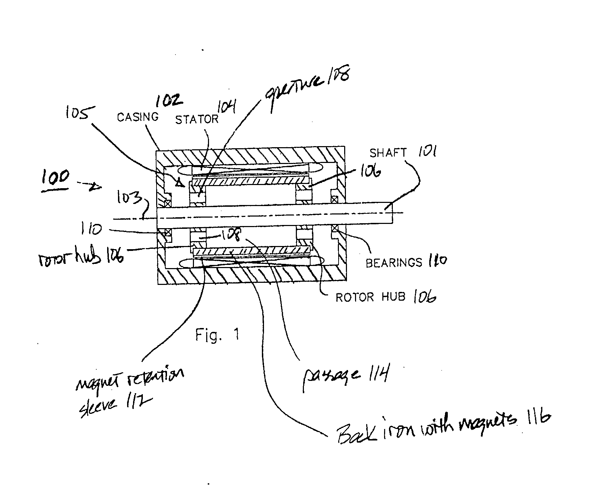

Figure 1 shows a first exemplary embodiment of the present invention. As shown in Figure 1, a machine 100 has a casing 102 and a drive shaft 101. Bearings 110 support the drive shaft. A rotor 105 is fixedly mounted on the drive shaft 101 and includes rotor hubs 106 that support a cylindrical magnet retention sleeve 112. A back iron 116 with magnets is also provided to structurally support and strengthen the magnet retention sleeve 112. The rotor hubs 106 clamp the magnet retention sleeve 112 and the back iron 116 with magnets, between them along the shaft 101. The rotor hubs and magnet sleeve and optional support sleeve can be configured or fastened together in any appropriate fashion, as those of ordinary skill in the art will recognize. The machine 100 also includes a stator 104 which includes windings. The stator 104 is located inside the casing 102 and partially surrounding or encompassing the rotor 105. Apertures 108 are provided in the rotor hubs 106, and communicate with the hollow interior of the rotor 105 to form one or more passages 114 through the interior of the rotor 105. The apertures 108 allow air to flow through an interior of the rotor 105, thereby cooling the rotor 105 and transferring heat from the rotor 105 to other, cooler parts of the machine.

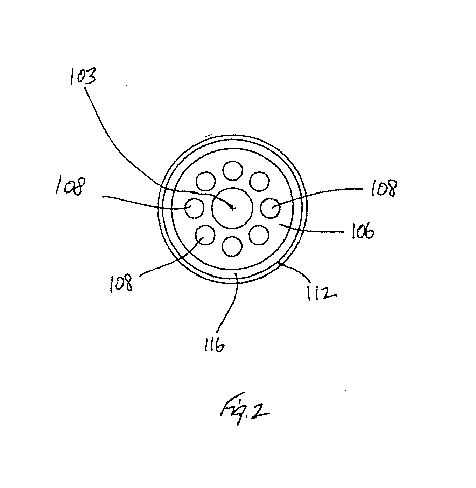

Figure 2 shows an end view of the rotor 105. As can be seen in Figure 2, the apertures 108 are provided equally spaced along a ring centered on the rotational axis 103 of the shaft 101 and the rotor 105. Those of ordinary skill in the art will easily recognize that any appropriate number of apertures with corresponding appropriate aperture dimensions, shapes and spacing can be used.

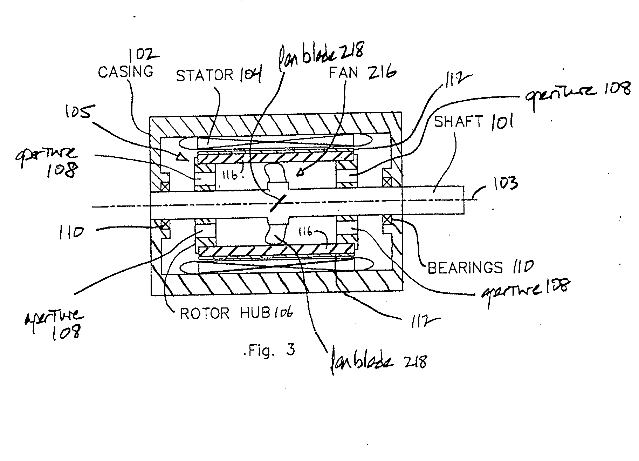

Figure 3 shows a second exemplary embodiment of the invention, which is similar to that shown in Figures 1 and 2 but also includes a fan 216 having fan blades 218 fixed to the drive shaft 101 and located in side the rotor 105 in the passage 114. The fan blades 218 of the fan 216 are angled so that when the shaft 101 spins during operation of the machine, air will be pulled in one end of the rotor 105 and pushed out the other end of the rotor 105 through corresponding apertures 108 in the rotor hubs 106. As those of ordinary skill in the art will appreciate, the direction of air flow through the rotor 105 shown in Figure 3 will depend on the rotational direction of the drive shaft 101. For machines that will run in both rotational directions, the fan 216 can be designed in accordance with known aero dynamic principles to be equally effective regardless of rotation direction.

In applications where the machine will be run in only one direction, or will be run primarily in one direction for most of the time or will be run in one direction at a higher power output than in the reverse direction, the fan 216 and fan blades 218 can be designed to operate more efficiently in one rotational direction than another rotational direction. For example, the fan and/or fan blades can be optimized to perform best in the rotation direction at which the machine will generate the most heat, consistent with operating requirements of the specific application.

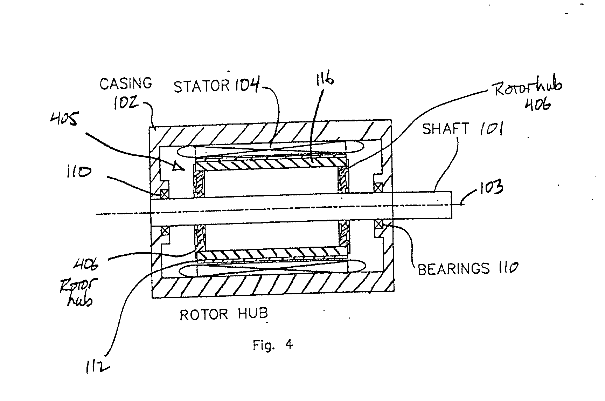

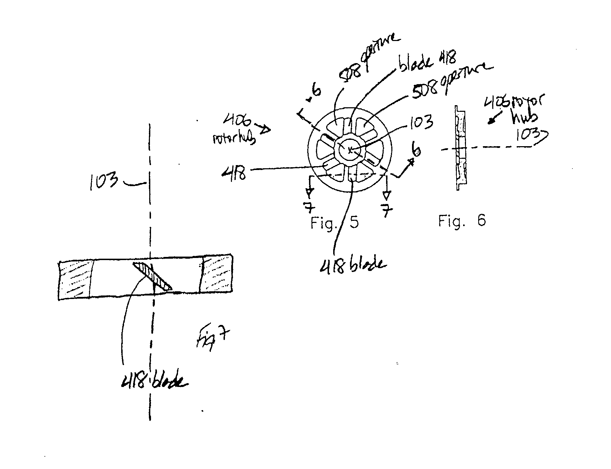

Figure 4 shows a third exemplary embodiment of the invention, wherein fans or fan blades are formed directly in the rotor hubs 406 of the rotor 405. Figure 5 shows an end view of the rotor hub 406 of Figure 4. As shown in Figure 5, the rotor hub 406 includes fan blades 418 that form spokes of the hub 406, and which are separated by apertures 508 between the blades 418.

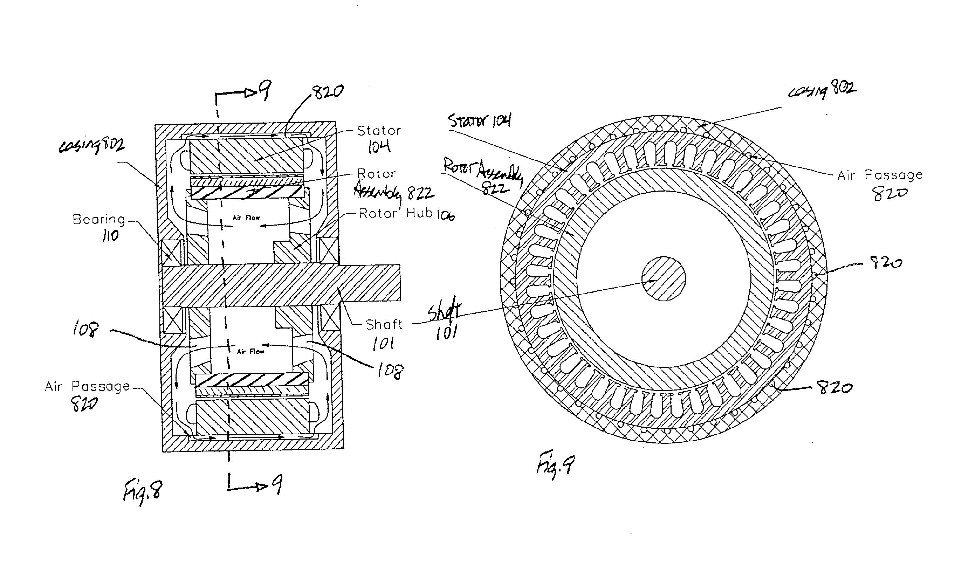

Figure 6 shows a sectional view of the rotor hub 406 of Figure 4 along the lines 6-6. Figure 7 shows a sectional view of the rotor hub 406 along the lines 7-7, and illustrates an exemplary angle of one of the blades 418 with respect to the rotational axis 103.

The considerations described above with respect to fan and blade design and air flow direction regarding the invention embodiment shown in Figure 3, apply equally to the invention embodiment shown in Figures 4-7. Those of ordinary skill in the art will also appreciate that design of the fan and blades can be appropriately influenced by intended operating speeds of the machine, desired mass air flow, noise and vibration considerations, and so forth. In addition, those of ordinary skill in the art will appreciate that the air movement can be accomplished with shapes other than fan blades. For example, tapered apertures can be used for bi-directional axial air flow.

Air that flows into one end of the rotor and exits the other end of the rotor in a flow along the rotational axis of the rotor, can be recirculated by flowing back through passageways formed between the stator and the machine casing, through passages through the stator, and/or back through an air gap between the stator and the rotor. In an exemplary embodiment of the invention, the machine casing is sealed so that the cooling air flowing through the rotor travels in a closed path or loop.

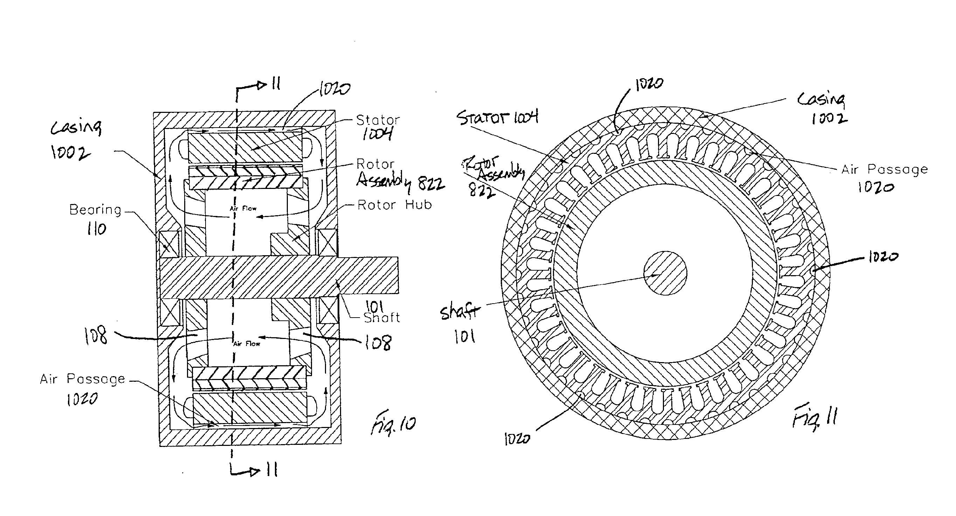

Figures 8-9 indicate an embodiment where passageways 820 are formed in the casing 802 of the machine, to allow air that has exited one end of the rotor to return through the passageways 820 and enter the other end of the rotor. The rotor is shown as a single rotor assembly or element 822 in Figure 9 for the sake of simplicity, rather than as separate components, e.g., a magnet sleeve, support sleeve, and so forth.

Figures 10-11 indicate another embodiment, where passageways 1020 are formed in the stator 1004 within the machine casing 1002, to allow air that has exited one end of the rotor to return through the passageways 1020 and enter the other end of the rotor.

In summary, Figures 9-11 show passageways whose walls are formed by surfaces of both the machine casing and the stator. In another embodiment, the passageways have sections whose walls are formed by only the machine casing. In yet another embodiment, the passageways have sections whose walls are formed by only the stator.

Applicants note that, as used herein, the words "comprising" and "comprise" indicate an open-ended list that is not limited to the specifically enumerated items or elements.

Those of ordinary skill in the art will appreciate that the present invention can be embodied in other specific forms then those explicitly disclosed, without departing from the spirt or essential characteristics of the invention, and that the invention is not limited to the specific embodiments described herein.

For example, principles of the present invention can be applied in an external-rotor brushless permanent magnet machine. Magnets or magnetic material in the rotor or rotor assembly can be any appropriate magnetic material, including but not limited to neodymium-iron-boron magnets, samarium-cobalt magnets, and so forth. Also it is well known in the art that there are also various types of electric machines that may benefit from this invention including switched reluctance machines and induction machines. Various embodiments of the invention can also be combined in various ways. For example, both the fan blades 218 and the rotor hub blades or vanes 418 can be provided. For example, the rotor hub blades 418 can be provided at only one end of the hollow rotor.

A machine 100 is described above, but the machine can be operated as a motor or a generator. The present invention can be embodied and applied in a motor, in a generator, and in a device that functions as both a motor and a generator.

The presently disclosed embodiments are therefore considered in all respects to be illustrative and not restrictive. The scope of the invention is indicated by the appended claims rather than the foregoing description, and all changes that come within the meaning and range and equivalence thereof are intended to be embraced therein.

## Claims

1. A rotary electromechanical device, comprising:
a rotor, the rotor comprising a hollow hub and a plurality of magnet poles, the hollow hub having at least one aperture at each end to form at least one first passage extending through the hollow hub;
a stator; and
a sealed casing surrounding the rotor and the stator so that cooling air that flows through the rotor travels in a closed path within the sealed casing.

2. The device of claim 1, wherein the at least one first passage extends along a rotational axis of the hollow hub.

3. The device of claim 1, wherein the rotor further comprises vanes fixed to the hollow hub to force air through the hollow hub when the rotor is spinning.

4. The device of claim 3, wherein the vanes are located in the at least one passage.

5. The device of claim 3, wherein the vanes are located at the at least one aperture.

6. The device of claim 3, wherein the vanes are arranged to drive air in the same direction.

7. The device of claim 1, comprising:
at least one second passage a) having walls formed by at least one of the stator and the outer casing, and b) communicating with each end of the at least one first passage.

8. The device of claim 7, wherein the device is a brushless machine.

9. The device of claim 7, wherein the at least one second passage extends through the stator.

10. The device of claim 7, wherein the at least one second passage extends between the stator and a case of the device.

11. The device of claim 1, comprising a stator partially surrounding the rotor.

12. A method for cooling a rotary electromechanical device having a rotor, a stator and a sealed casing surrounding the rotor and the stator so that cooling air that flows through the rotor travels in a closed path within the sealed casing, comprising:
providing the rotor with a hollow center and apertures at each end of the rotor; and
driving air through the hollow center of the rotor via the apertures; and
driving air through passages formed between the sealed casing and the stator.

13. The method of claim 12, further comprising:
providing vanes at an end of the rotor; and
spinning the rotor to drive air through the apertures and the hollow center of the rotor via the vanes.

14. An electric machine, comprising:
a rotor;
a sealed casing surrounding the rotor so that cooling air that flows through the rotor travels in a closed path within the sealed casing; and
means for driving air through a center of the rotor.

15. The electric machine of claim 14, wherein the means for driving air is arranged to drive air through the center of the rotor, along a rotational axis of the rotor.

16. The electric machine of claim 14, wherein the means for driving comprises:
vanes fixed to the rotor and angled to force air through a hollow hub of the rotor when the rotor is rotating.

17. The electric machine of claim 14, comprising:
a stator partially surrounding the rotor within the sealed casing; and
means for conveying air exiting from one end of the rotor, to the other end of the rotor.

18. The electric machine of claim 14, comprising:
bearings encompassing a shaft fixed to the rotor and supporting the shaft relative to the sealed casing.

19. The method of claim 12, comprising:
supporting the rotor relative to the sealed casing via bearings encompassing a shaft fixed to the rotor.

20. The rotary electromechanical device of claim 1, comprising:
bearings encompassing a shaft fixed to the rotor and supporting the shaft relative to the sealed casing.

21. A rotary electromechanical device, comprising:
a casing;
a rotor, the rotor comprising a hollow hub and a plurality of magnet poles, the hollow hub having at least one aperture at each end to form at least one first passage extending through the hollow hub;
a shaft secured to the rotor in a non-rotatable manner; and
bearings mounted on the casing for supporting the shaft.

22. The device of claim 21, wherein the casing is sealed and surrounds the rotor and the stator so that cooling air that flows through the rotor travels in a closed path within the sealed casing.

23. The device of claim 22, comprising air passages formed between the sealed casing and the stator.
